# EUROPÄISCHE PATENTSCHRIFT

(11) **EP 0 827 889 B1**
(45) Veröffentlichungstag und Bekanntmachung des Hinweises auf die Patenterteilung: **27.06.2001**
(21) Anmeldenummer: 97890150.2
(22) Anmeldetag: 25.07.1997
(51) Int. Cl.: B61D 27/00

(54) **Verfahren zur Steuerung einer Klimaanlage**
Method for controlling an air-conditioning installation
Méthode de contrôle d'une installation de conditionnement

(30) Priorität: 19.08.1996 AT 148396
(43) Veröffentlichungstag der Anmeldung: 11.03.1998
(73) Patentinhaber: Liebherr-Verkehrstechnik GmbH, 1020 Wien (AT)
(72) Erfinder: Ohnesorg, Werner, Dipl.-Ing., 1170 Wien (AT)
(74) Vertreter: Matschnig, Franz, Dipl.-Ing.

(56) Entgegenhaltungen:
- AT-B- 244 382
- AT-B- 296 372
- DE-A- 1 580 967
- DE-A- 2 542 768

## Beschreibung

Die vorliegende Erfindung betrifft ein Verfahren zur Steuerung einer Klimaanlage eines Fahrzeuges, insbesondere eines elektrisch betriebenen Schienenfahrzeuges, mit einer Kältemaschine zum Erzeugen einer bestimmten Kälteleistung und einem Verdampfer zur Abgabe dieser Kälteleistung an eine in das Fahrzeuginnere strömende Zuluft, wobei die Anlage in Abhängigkeit von einer im Fahrzeuginnenraum herrschenden Ist-Temperatur und einer vorgebbaren Soll-Temperatur gesteuert wird.

Zur Anpassung der Kühlleistung einer Klimaanlage an den jeweiligen Bedarf, der im wesentlichen durch die herrschende Außentemperatur, die Sonneneinstrahlung, Personenbesetzung des Fahrzeuges und die Temperatur im Fahrzeuginneren bestimmt ist, stehen für den Kühlbetrieb grundsätzlich zwei unterschiedliche Möglichkeiten zur Verfügung.

Eine Möglichkeit zum Betreiben einer Klimaanlage besteht darin, daß die Kältemaschine im Dauerbetrieb mit einer im wesentlichen konstanten Leistung betrieben wird und die Anpassung an die im Fahrzeuginneren benötigte Kühlleistung durch Nachbeheizen der gekühlten Luft realisiert wird.

Diese Art einer Anlage weist den Vorteil auf, daß systembedingt eine gute Entfeuchtung der Zuluft erfolgt, da die Kältemaschine die Luft ständig unter den Taupunkt kühlt. Weiters besitzen Anlagen dieses Typs den Vorteil, daß sie mechanisch einfach aufgebaut und einfach zu regeln sind, sodaß diese Anlagen kostengünstig und wenig störanfällig sind. Als ein Nachteil dieser Anlagentype fällt jedoch ins Gewicht, daß der Energieaufwand für die Klimatisierung bei abnehmendem Kälteleistungsbedarf ansteigt, da die Kälteanlage einen annähernd konstanten Energieverbrauch aufweist und im Ausmaß der überschüssigen Kälteleistung zusätzlich Heizenergie verbraucht wird.

Eine weitere, Möglichkeit zur Steuerung einer Klimaanlage besteht darin, die Kälteleistung der Kältemaschine durch schaltungstechnische Maßnahmen, z.B. durch Bypass-Schaltungen, Zylinderabschaltungen etc., durch zyklische Abschaltung bzw. Taktung des Kompressors oder durch Drehzahlveränderung des Kompressors (in Stufen oder kontinuierlich) zu reduzieren.

Ein Vorteil dieser Anlagenart liegt in einem geringen Energieverbrauch, da nur so viel Kälteleistung produziert werden muß wie zur Kühlung des Fahrzeuginneren erforderlich ist. Nachteilig wirkt sich jedoch aus, daß systembedingt kein planmäßiger Entfeuchtungsbetrieb realisiert werden kann, sodaß es bei gemäßigten Außentemperaturen (geringe Kühlleistung) und hohen Luftfeuchtigkeiten im Fahrzeuginneren zu einem schwülen Klima kommt, welches für die Fahrgäste unbequem ist und unter anderem ein Beschlagen der Scheiben zur Folge haben kann.

In der AT-PS 244 382 und der AT-PS 296 372 sind Klimaanlagen beschrieben, bei welchen sich die Zuluft aus zwei Anteilen zusammensetzt. Der Hauptanteil ist durch einen Außenthermostaten in seiner Temperatur regelbar, während nur der einen geringen Anteil ausmachende Zusatzanteil konstante Temperatur aufweist. Beide genannten Vorhalte beschreiben Konstruktionen mit einem temperaturgeregelten Grundanteil für die Zuluft.

Auch in der Beschreibungseinleitung der AT-PS 286 349 ist als Stand der Technik eine Klimaanlage beschrieben, bei der eine Grundmenge an Luft in den Fahrgastraum eingeblasen wird, deren Temperatur einen entsprechend den Witterungsverhältnissen unter Berücksichtigung der Kennwerte des Fahrzeuges eingestellt ist, was eine eindeutige Temperaturregelung darstellt.

Bei der in der DE-OS 1 580 967 erläuterten Klimaanlage ist die in den Fahrgastraum zugeführte Zuluft wieder in Grundanteil und Zusatzanteil aufgeteilt, wobei der letztere die Heiz- oder Kühlleistung an unterschiedliche Fahrgastanzahlen anpassen soll. Der Grundanteil ist dabei sowohl in seiner Temperatur in Abhängigkeit von der Witterungsverhältnissen geregelt und wird durch einen zusätzlichen Warmluftanteil zum einen Teil an die unterschiedlichen Besetzungsgrade des Fahrgastraumes angepaßt. Zum anderen wird diese Anpassung auch zum Teil durch eine Verringerung der zugeführten Kühlluftmenge bewerkstelligt. Auch hier wird nicht von der herkömmlichen Aufteilung der Zuluft in zwei unterschiedliche Anteile abgewichen. Einer dieser Anteile der Zuluft ist immer in seiner Temperatur zumindest in Abhängigkeit von der Außenverhältnissen geregelt.

Es ist daher eine Aufgabe der Erfindung, ein Verfahren zum Betreiben einer Klimaanlage der eingangs genannten Art anzugeben, bei welchem die Anlage mit einem geringen Energieverbrauch betrieben werden kann und dennoch eine planmäßig gute Entfeuchtung des Fahrzeuginnenraumes sichergestellt ist.

Diese Aufgabe wird erfindungsgemäß mit einem Verfahren gelöst, bei welchem die in das Fahrzeuginnere einströmende Zuluft durch Steuerung der Kälteleistung der Kältemaschine im wesentlichen konstant auf eine vorbestimmte charakteristische Zuluft-Temperatur geregelt wird und lediglich der Volumenstrom der Zuluft in das Fahrzeuginnere in Abhängigkeit von der Ist- und der Solltemperatur geregelt wird, um die erforderliche Kühlleistung an das Fahrzeuginnere abzugeben. Die in das Fahrzeug einströmende Zuluft wird immer auf eine konstante Temperatur gehalten, bei welcher eine gute Entfeuchtung der Zuluft erfolgt, sodaß unabhängig von dem Betriebszustand der Klimaanlage eine gute Entfeuchtung der Zuluft sichergestellt ist. Die in das Fahrzeug einzubringende Kühlleistung wird nun über den Volumenstrom der Zuluft gesteuert, sodaß ein energiesparender Kühlbetrieb der Klimaanlage möglich ist. Gute Erfahrungen sind bei einer charakteristischen Temperatur der Zuluft im Bereich zwischen 12 und 15°C gemacht worden, da in diesem Bereich eine gute Entfeuchtung der zugeführten Zuluft erfolgen kann

Als ein einfaches Mittel zur Steuerung des Volumenstroms hat sich ein in dem Zuluftkanal der Anlage angeordneter Ventilator erwiesen, dessen Förderleistung durch eine Drehzahlregelung steuerbar ist.

Bei einem bevorzugten Ausführungsbeispiel des erfindungsgemäßen Verfahrens wird die im Fahrzeuginneren erforderliche Kühlleistung durch Berechnen aus der Ist-, der Solltemperatur und klimatechnischen Parametern des Fahrzeuginnenraumes, wie Volumen, charakteristische Personenanzahl und dgl. ermittelt und der in das Fahrzeuginnere einströmende Zuluft-Volumenstrom aufgrund des berechneten Wertes für die Kühlleistung ermittelt. Zusätzlich kann für die Berechnung der im Fahrzeuginneren erforderlichen Kühlleistung die herrschende Außentemperatur herangezogen werden, um eine genauere Steuerung der Anlage zu ermöglichen.

Zur Steuerung der Kälteleistung der Kältemaschine hat es sich als vorteilhaft erwiesen, wenn diese in Abhängigkeit von dem charakteristischen Wert für die Zuluft-Temperatur und der im Zuluftkanal gemessenen Ist-Temperatur der Zuluft geregelt wird.

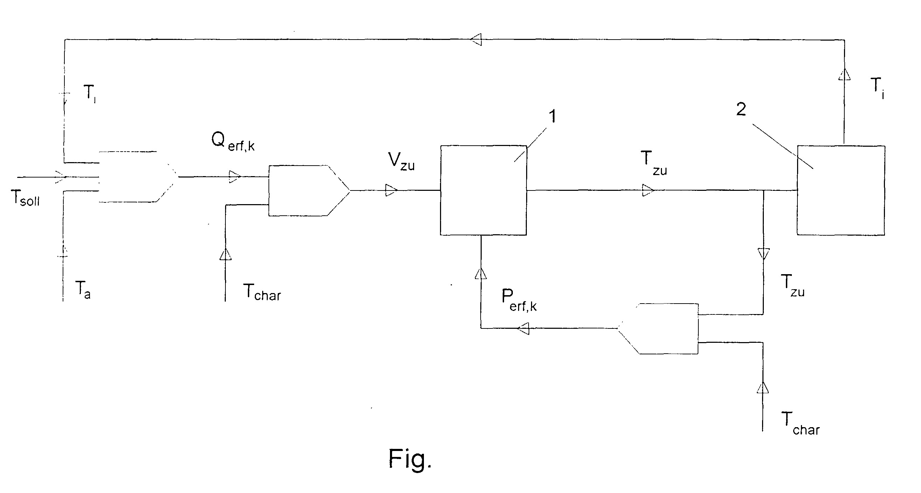

Weitere Merkmale und Vorteile des erfindungsgemäßen Verfahrens gehen aus der folgenden Beschreibung eines nicht einschränkenden Ausführungsbeispiels hervor, wobei auf die beiliegende Figur Bezug genommen wird, welche eine schematische Darstellung der Steuerschleifen für eine Klimaanlage der erfindungsgemäßen Art darstellt.

In dieser Figur ist schematisch eine Kälteanlage 1 mit einer nicht näher dargestellten Kältemaschine zum Erzeugen einer bestimmten Kälteleistung und einem ebenso nicht näher dargestellten Verdampfer zum Abgeben dieser Kälteleistung gezeigt. Die durch den Zuluftkanal der Klimaanlage strömende Zuluft wird an dem Verdampfer vorbeigeführt und dabei auf eine bestimmte charakteristische Temperatur T_{zu} abgekühlt und im wesentlichen mit dieser Temperatur T_{zu} dem Fahrzeuginnenraum 2 zugeführt.

Im Fahrzeuginnenraum 2 herrscht eine Ist-Temperatur Tᵢ, die üblicherweise durch einen oder mehrere Temperaturfühler gemessen und der Steuerung zugeführt wird, wobei für diesen Fahrzeuginnenraum 2 eine bestimmte Solltemperatur Tₛₒₗₗ vorgebbar ist, welche durch die Steuerung der Anlage zu realisieren ist.

Erfindungsgemäß wird dabei die Temperatur T_{zu} der Zuluft durch die Steuerung auf einen im wesentlichen konstanten vorbestimmten charakteristischen Wert T_{char} gehalten. Zu diesem Zweck ist in der Steuerungseinheit der Klimaanlage eine erste Steuerschleife vorgesehen, bei welcher der mittels eines Temperaturfühlers im Zuluftkanal gemessene Ist-Wert für die Zuluft-Temperatur T_{zu} mit dem vorgegebenen Wert T_{char} verglichen und in Abhängigkeit von dem Vergleich dieser Werte die erforderliche Kälteleistung P_{erf,k} der Kälteanlage 1 gesteuert wird, um die Zulufttemperatur ständig auf dem charakteristischen Wert T_{zu}=T_{char} zu halten.

Die Steuerung der Klimaanlage auf eine konstante Zulufttemperatur T_{zu} hat den großen Vorteil, daß bei Auslegung der Anlage ein charakteristischer Wert für die Temperatur gewählt werden kann, welcher einerseits für den vorgesehenen Einsatzbereich eine möglichst geringen Energieverbrauch verursacht, andererseits jedoch ständig eine sichere und gute Entfeuchtung der Zuluft ermöglicht.

Zur Klimatisierung des Fahrzeuginnenraumes 2 ist erfindungsgemäß eine weitere Steuerschleife vorgesehen, in welcher die für den Innenraum vorgegebene Solltemperatur Tₛₒₗₗ mit der im Fahrzeuginnenraum 2 gemessenen Ist-Temperatur Tᵢ verglichen und zur Berechnung der erforderlichen Kühlleistung Q_{erf,k} verwendet wird. Für die Berechnung der Kühlleistung Q_{erf,k} werden zusätzlich klimatechnische Parameter des Fahrzeuges, wie z.B. Volumen, Personenanzahl, Sonneneinstrahlung usw. herangezogen. In vielen Fällen wird zur Verbesserung der Berechnung der erforderlichen Kühlleistung auch ein gemessener Wert für die Außentemperatur Tₐ hinzugezogen.

Auf Grundlage der Berechnung der erforderlichen Kühlleistung Q_{erf,k} wird unter Berücksichtigung des charakteristischen Wertes für die Zulufttemperatur T_{char} ein erforderlicher Zuluft-Volumenstrom V_{zu} ermittelt, um die Kühlleistung Q_{erf,k} bei konstanter Zulufttemperatur T_{zu} in das Fahrzeuginnere 2 zu fördern.

Der in das Fahrzeug eingebrachte Volumenstrom V_{zu} kann beispielsweise durch Klappen, Schieber, Drosseln u. dgl. und/oder durch die Förderleistung eines im Zuluftkanal angeordneten Ventilators eingestellt werden. Das heißt, die Berechnung des Zuluftvolumenstroms V_{zu} durch die Steueranlage wird folglich zur Steuerung von Klappen oder zur Drehzahlregelung eines Ventilators umgesetzt, um durch einen höheren oder niedrigeren Volumenstrom V_{zu} die erforderliche Kühlleistung Pₖ bei konstanter Zuluft-Temperatur T_{zu} in den Fahrzeuginnenraum 2 zu fördern.

## Patentansprüche

1. Verfahren zur Steuerung einer Klimaanlage eines Fahrzeuges, insbesondere eines elektrisch betriebenen Schienenfahrzeuges, mit einer Kältemaschine zum Erzeugen einer bestimmten Kälteleistung und einem Verdampfer zur Abgabe dieser Kälteleistung an eine in das Fahrzeuginnere strömende Zuluft, wobei die Anlage in Abhängigkeit von einer im Fahrzeuginnenraum herrschenden Ist-Temperatur (Tᵢ) und einer vorgebbaren Solltemperatur (Tₛₒₗₗ) gesteuert wird, **dadurch gekennzeichnet, daß** die im Kühlbetrieb in das Fahrzeuginnere einströmende Zuluft durch Steuerung der Kälteleistung der Kältemaschine (1) auf eine im wesentlichen konstante, vorbestimmte, charakteristische Zuluft-Temperatur (T_{char}) geregelt wird, **und daß** zur Anpassung an die im Fahrzeuginneren benötigte Kühlleistung lediglich der Volumenstrom (V_{zu}) der Zuluft in das Fahrzeuginnere in Abhängigkeit von der Ist- (Ti) und der Soll-Temperatur (Tₛₒₗₗ) geregelt wird .

2. Verfahren nach Anspruch 1, **dadurch gekennzeichnet, daß** die charakteristische Tempera tur (T_{char}) der Zuluft im Bereich zwischen 12 und 15°C liegt.

3. Verfahren nach Anspruch 1 oder 2, **dadurch gekennzeichnet, daß** der Volumenstrom (V_{zu}) der Zuluft durch eine Drehzahlsteuerung eines in einem Zuluftkanal der Klimaanlage befindlichen Ventilators eingestellt wird.

4. Verfahren nach einem der Ansprüche 1 bis 3, **dadurch gekennzeichnet, daß** die im Fahrzeuginneren erforderliche Kühlleistung (Q_{erf,k}) durch Berechnen aus der Ist- (Tᵢ), der Soll-Temperatur (Tₛₒₗₗ) und klimatechnischen Parametern des Fahrzeuginnenraumes, wie Volumen, charakteristische Personenanzahl und dgl. ermittelt wird und daß der in das Fahrzeuginnere einströmenden Zuluft-Volumenstrom (V_{zu}) aufgrund des berechneten Wertes für die Kühlleistung (Q_{erf,k}) ermittelt wird.

5. Verfahren nach Anspruch 4, **dadurch gekennzeichnet, daß** für die Berechnung der im Fahrzeuginneren erforderlichen Kühlleistung (Q_{erf,k}) die herrschende Außentemperatur (Tₐ) herangezogen wird.

6. Verfahren nach einem der Ansprüche 1 bis 5, **dadurch gekennzeichnet, daß** die Kälteleistung (P_{erf,k}) der Kältemaschine in Abhängigkeit von dem charakteristischen Wert für die Zuluft-Temperatur (T_{char}) und der im Zuluftkanal gemessenen Isttemperatur (T_{zu}) der Zuluft geregelt wird.

## Claims

1. Method of controlling an air-conditioning system in a vehicle, in particular an electrically operated rail-borne vehicle, having a refrigerating machine for the purpose of generating a predetermined refrigerating capacity and having an evaporator for the purpose of outputting this refrigerating capacity to supply air flowing into the interior of the vehicle, wherein the system is controlled in dependence upon an actual temperature (Tᵢ) prevailing in the internal compartment of the vehicle and upon a predeterminable desired temperature (Tₛₒₗₗ), characterised in that the supply air flowing into the interior of the vehicle during the cooling operation is regulated by controlling the refrigerating capacity of the refrigerating machine (1) to a substantially constant, predetermined, characteristic supply air temperature (T_{char}), and that for the purpose of adapting to the cooling capacity required in the interior of the vehicle, only the volume flow (V_{zu}) of the supply air into the interior of the vehicle is regulated in dependence upon the actual temperature (Tᵢ) and the desired temperature (Tₛₒₗₗ).

2. Method according to claim 1, characterised in that the characteristic temperature (T_{char}) of the supply air lies between 12 and 15 °C.

3. Method according to claim 1 or 2, characterised in that the volume flow (V_{zu}) of the supply air is adjusted by controlling the rotational speed of a ventilator located in a supply air channel of the air-conditioning system.

4. Method according to any one of the claims 1 to 3, characterised in that the cooling capacity (Q_{erf,k}) required in the interior of the vehicle is determined by calculating a value from the actual temperature (Tᵢ), the desired temperature (Tₛₒₗₗ) and air-conditioning technology parameters of the internal compartment of the vehicle, such as volume, characteristic number of passengers and the like, and that the volume flow (V_{zu}) of the supply air flowing into the interior of the vehicle is determined on the basis of the calculated value for the cooling capacity (Q_{erf,k}).

5. Method according to claim 4, characterised in that the prevailing external temperature (Tₐ) is used for the purpose of calculating the cooling capacity (Q_{erf,k}) required in the interior of the vehicle.

6. Method according to any one of the claims 1 to 5, characterised in that the refrigerating capacity (P_{erf,k}) of the refrigerating machine is regulated in dependence upon the characteristic value for the supply air temperature (T_{char}) and upon the actual temperature (T_{zu}) of the supply air as measured in the supply air channel.

## Revendications

1. Procédé pour commander une installation de climatisation d'un véhicule, notamment d'un véhicule ferroviaire mû électriquement, comportant une machine frigorifique pour produire une puissance frigorifique déterminée et un évaporateur pour délivrer cette puissance frigorifique à un air d'alimentation circulant à l'intérieur du véhicule, l'installation étant commandée en fonction d'une température réelle (Tᵢ) qui règne dans l'espace intérieur du véhicule et d'une température de consigne pouvant être prédéterminée (Tₛₒₗₗ), **caractérisé en ce que** l'air d'alimentation, qui dans le fonctionnement de refroidissement pénètre à l'intérieur du véhicule, est réglé, par la commande de la puissance frigorifique de la machine frigorifique (1) à une température caractéristique prédéterminée essentiellement constante (T_{char}) de l'air d'alimentation **et que** pour l'adaptation à la puissance de refroidissement nécessaire à l'intérieur du véhicule, seul le débit volumique (V_{zu}) de l'air d'alimentation pénétrant à l'intérieur du véhicule est réglé en fonction de la température réelle (Tᵢ) et de la température de consigne (Tₛₒₗₗ).

2. Procédé selon la revendication 1, **caractérisé en ce que** la température caractéristique (T_{char}) de l'air d'alimentation est située dans la gamme comprise entre 12 et 15°C.

3. Procédé selon la revendication 1 ou 2, **caractérisé en ce que** le flux volumique (V_{zu}) de l'air d'alimentation est réglé au moyen d'une commande de la vitesse de rotation d'un ventilateur situé dans un canal d'alimentation en air de l'installation de climatisation.

4. Procédé selon l'une des revendications 1 à 3, **caractérisé en ce que** la puissance de refroidissement (Q_{erf,k}) nécessaire à l'intérieur du véhicule est déterminée par calcul à partir de la température réelle (Tᵢ), de la température de consigne (Tₛₒₗₗ) et des paramètres techniques de climatisation dans l'espace intérieur du véhicule tels que le volume, le nombre caractéristique de personnes et analogues, **et que** le débit volumique (V_{zu}) de l'air d'alimentation, qui pénètre à l'intérieur du véhicule, est déterminé sur la base de la valeur calculée de la puissance de refroidissement (Q_{erf,k}).

5. Procédé selon la revendication 4, caractérisé en ce que pour le calcul de la puissance de refroidissement (Q_{erf,k}) nécessaire à l'intérieur du véhicule on utilise la température extérieure présente (Tᵢ).

6. Procédé selon l'une des revendications 1 à 5, **caractérisé en ce que** la puissance de refroidissement (Q_{erf,k}) de la machine frigorifique est réglée en fonction de la valeur caractéristique de la température (T_{char}) de l'air d'alimentation et de la température réelle (T_{zu}) mesurée dans le canal d'alimentation en air, de l'air d'alimentation.
